# EUROPEAN PATENT APPLICATION

(11) **EP 3 073 371 A1**
(43) Date of publication of application: **28.09.2016**
(21) Application number: 15195204.1
(22) Date of filing: 18.11.2015
(51) Int. Cl.: G06F 9/445, G06F 9/44

(54) **METHOD AND DEVICE FOR LOADING THEME APPLICATION**

(30) Priority: 23.03.2015 CN 201510127975
(71) Applicant: Xiaomi Inc., Beijing 100085 (CN)
(72) Inventor: HUO, Donghai, 100085 BEIJING (CN); CHEN, Dejia, 100085 BEIJING (CN); ZHU, Cai, 100085 BEIJING (CN)
(74) Representative: Delumeau, François Guy

(57) **Abstract**

The present disclosure relates to a method and a device for loading a theme application, which are used to shorten the time from downloading the theme application to the intelligent terminal to using the theme application on the intelligent terminal. The method includes: detecting (S201) an operation instruction to the intelligent terminal from a user; determining (S202) whether an application module corresponding to the operation instruction exists in the theme application according to the operation instruction; loading (S203) the application module to the intelligent terminal if it is determined that the application module corresponding to the operation instruction exists.

## Description

### TECHNICAL FIELD

The present disclosure generally relates to the Internet field, and more particularly, to a method for loading a theme application, a device for loading a theme application.

### BACKGROUND

With the increasing individual requirement of the intelligent phone, the method for providing theme applications with various formats through a theme application database (theme app) has become the developing focus of the related technicians. In the process of downloading the theme application from the theme application database and loading the theme application to the intelligent phone, following steps are required in the related art. The steps includes: downloading the theme application from the theme application database; decompressing the compression package of the theme application to obtain the compression package corresponding to each application module corresponding to the theme application; copying the compression package corresponding to each application module to a corresponding resource catalog in the intelligent phone; and modifying the theme configuration on the intelligent phone.

In the whole process, the intelligent phone needs to consume an enormous amount of time to decompress, copy and merge the theme application, and then the theme application can be applied in the intelligent terminal, such that the user wastes a lot of time on waiting.

### SUMMARY

According to a first aspect of embodiments of the present disclosure, there is provided a method for loading a theme application, the method is applied in an intelligent terminal and includes:
detecting an operation instruction to the intelligent terminal from a user;
determining whether an application module corresponding to the operation instruction exists in the theme application according to the operation instruction;
loading the application module to the intelligent terminal if it is determined that the application module corresponding to the operation instruction exists.

In an embodiment, the method further includes:
sending a first download instruction with a first priority to a theme application database installed on the intelligent terminal if it is determined that the application module corresponding to the operation instruction does not exist;
downloading the application module at the first priority from the theme application database according to the first download instruction.

In an embodiment, the method further includes:
detecting whether a second download instruction about the theme application exists in a theme application database installed on the intelligent terminal;
downloading the theme application via a second thread in the intelligent terminal if the second download instruction about the theme application exists.

In an embodiment, downloading the theme application via a second thread in the intelligent terminal includes:
determining download priorities corresponding to application modules in the theme application;
downloading the application modules in the theme application in an order determined according to the download priorities corresponding to the application modules.

In an embodiment, the method further includes:
displaying an indication indicating that the theme application is successfully loaded after any application module in the theme application is downloaded.

According to a second aspect of embodiments of the present disclosure, there is provided a device for loading a theme application, the device is applied in an intelligent terminal and includes:
a first detecting module, configured to detect an operation instruction to the intelligent terminal from a user;
a first determining module, configured to determine whether an application module corresponding to the operation instruction exists in the theme application according to the operation instruction detected by the first detecting module;
a loading module, configured to load the application module to the intelligent terminal if the first determining module determines that the application module corresponding to the operation instruction exists.

In an embodiment, the device further includes:
a sending module, configured to send a first download instruction with a first priority to a theme application database installed on the intelligent terminal if the first determining module determines that the application module corresponding to the operation instruction does not exist;
a first downloading module, configured to download the application module at the first priority from the theme application database according to the first download instruction sent by the sending module.

In an embodiment, the device further includes:
a second detecting module, configured to detect whether a second download instruction about the theme application exists in a theme application database installed on the intelligent terminal;
a second downloading module, configured to download the theme application if the second detecting module detects that the second download instruction about the theme application exists.

In an embodiment, the second downloading module includes:
a determining sub module, configured to determine download priorities corresponding to application modules in the theme application corresponding to the second download instruction detected by the second detecting module;
a downloading sub module, configured to download the application modules in the theme application in an order determined according to the download priorities corresponding to the application modules determined by the determining sub module.

In an embodiment, the device further includes:
a displaying module, configured to display an indication indicating that the theme application is successfully loaded after any application module in the theme application is downloaded by the second downloading module.

According to a third aspect of embodiments of the present disclosure, there is provided a device for loading a theme application, including:
a processor; and
a memory for storing instructions executable by the processor.

The processor is configured to:
detect an operation instruction to the intelligent terminal from a user;
determine whether an application module corresponding to the operation instruction exists in the theme application according to the operation instruction;
load the application module to the intelligent terminal if it is determined that the application module corresponding to the operation instruction exists.

In one particular embodiment, the steps of the method for loading a theme application are determined by computer program instructions.

Consequently, according to a fourth aspect, the invention is also directed to a computer program for executing the steps of a method for loading a theme application as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by embodiments of the present disclosure may have the following advantageous effects. It is determined whether the application module corresponding to the operation instruction exists in the downloaded theme application according to the operation instruction. If it is determined that the application module corresponding to the operation instruction exists, the application module is loaded to the intelligent terminal, such that the aim of loading corresponding application module according to the specific operation instruction to the intelligent terminal from the user is achieved. The theme application may be applied in the intelligent terminal without wasting amount of time on decompressing, copying and merging the theme application by the intelligent terminal, thus reducing the waiting time of the user for using the theme application.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a first schematic diagram of a theme application illustrated according to an exemplary embodiment.
Fig. 1B is a second schematic diagram of a theme application illustrated according to an exemplary embodiment.
Fig. 1C is a third schematic diagram of a theme application illustrated according to an exemplary embodiment.
Fig. 1D is a fourth schematic diagram of a theme application illustrated according to an exemplary embodiment.
Fig. 1E is a fifth schematic diagram of a theme application illustrated according to an exemplary embodiment.
Fig. 1F is a first schematic diagram of another theme application illustrated according to an exemplary embodiment.
Fig. 1G is a second schematic diagram of another theme application illustrated according to an exemplary embodiment.
Fig. 2 is a flow chart of a method for loading a theme application according to an exemplary embodiment.
Fig. 3 is a flow chart of a method for loading a theme application according to a first exemplary embodiment.
Fig. 4 is a flow chart of a method for loading a theme application according to a second exemplary embodiment.
Fig. 5 is a block diagram of a device for loading a theme application according to an exemplary embodiment.
Fig. 6 is block diagrams of another device for loading a theme application according to an exemplary embodiment.
Fig. 7 is a block diagram of a device for loading a theme application according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

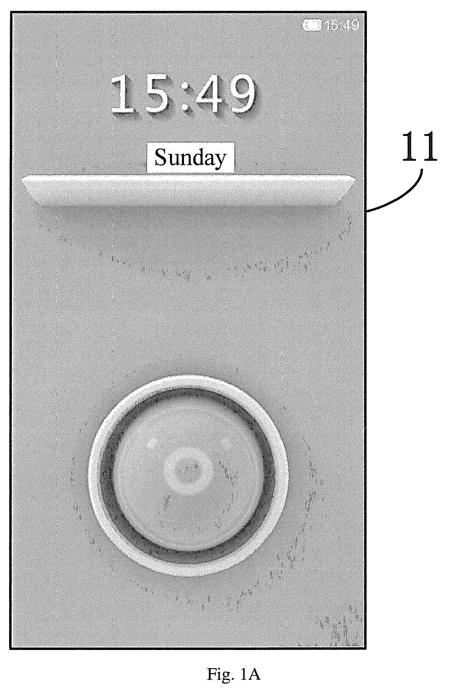

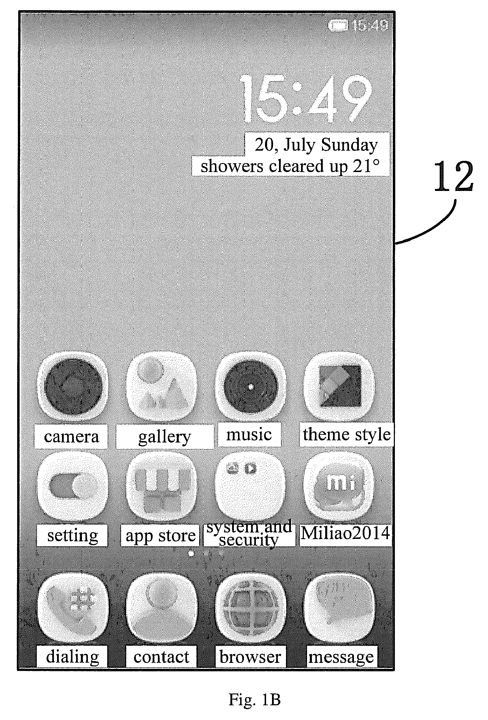

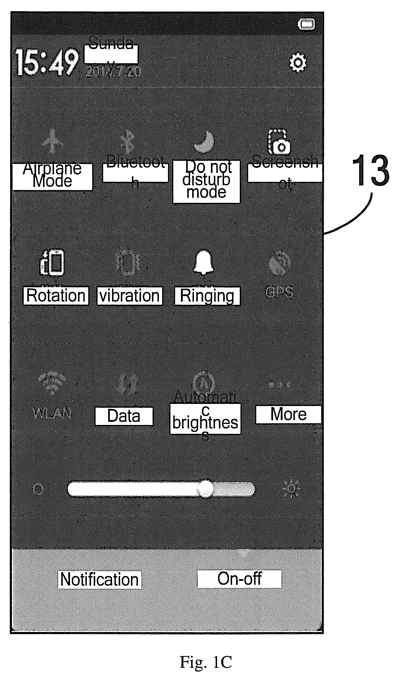

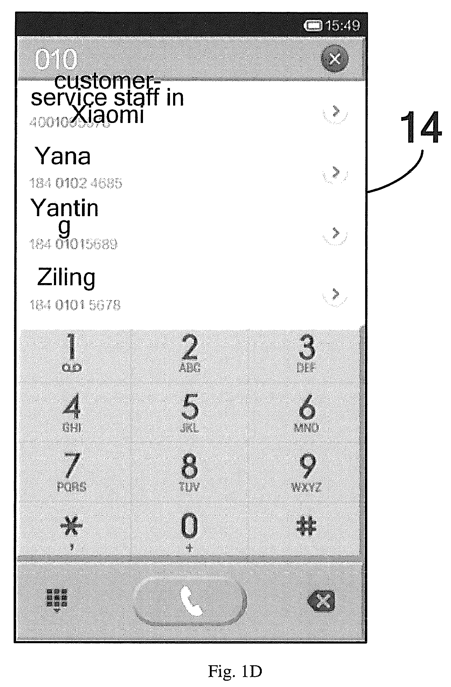

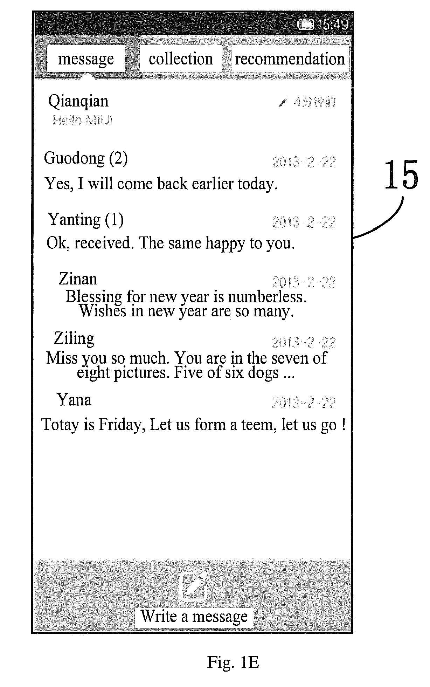

Fig. 1A is a first schematic diagram of a theme application illustrated according to an exemplary embodiment. Fig. 1B is a second schematic diagram of a theme application illustrated according to an exemplary embodiment. Fig. 1C is a third schematic diagram of a theme application illustrated according to an exemplary embodiment. Fig. 1D is a fourth schematic diagram of a theme application illustrated according to an exemplary embodiment. Fig. 1E is a fifth schematic diagram of a theme application illustrated according to an exemplary embodiment. As shown in Figs 1A-1E, exteriors illustrated by a theme application named "sunny" on an intelligent terminal are shown. Fig. 1A shows an exterior illustrated by a screen locking module of the theme application when the intelligent terminal is in a lock screen state. Fig. 1B shows an exterior illustrated by a desktop module of the theme application on the desktop of the intelligent terminal. With the desktop module in the theme application "sunny", the interface and icons are shown on the desktop of the intelligent terminal according to configuration parameters configured by the desktop module. Fig. 1C shows an exterior illustrated by a status bar module of the theme application on the intelligent terminal. Fig. 1D shows an exterior illustrated by a contact list module of the theme application on the intelligent terminal. Fig. 1E shows an exterior illustrated by a message module of the theme application on the intelligent terminal.

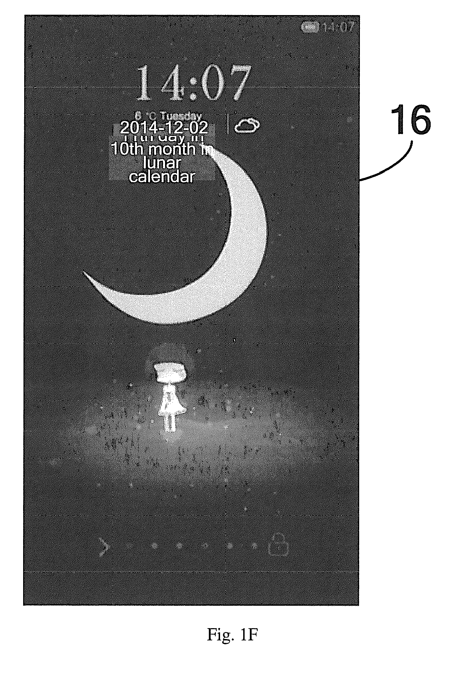

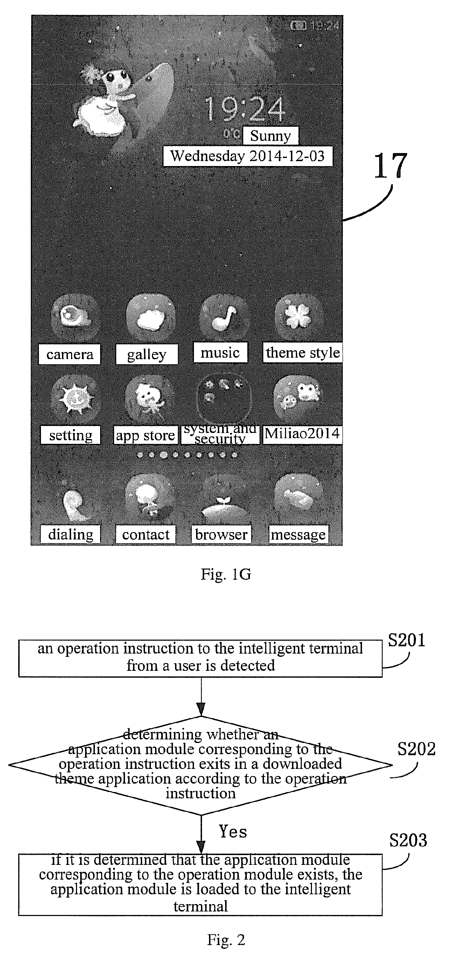

Fig. 1F is a first schematic diagram of another theme application illustrated according to an exemplary embodiment. Fig. 1G is a second schematic diagram of another theme application illustrated according to an exemplary embodiment. As shown in Figs 1F-G, exteriors illustrated by a theme application named "Mailafent-memories of moonlight" on the intelligent terminal are shown. Fig. 1F shows another exterior illustrated by a screen locking module of the theme application when the intelligent terminal is in a lock screen state. Fig. 1G shows another exterior illustrated by a desktop module of the theme application on the desktop of the intelligent terminal. With the desktop module in the theme application "Mailafent-memories of moonlight", the interface and icons are shown on the desktop of the intelligent terminal according to configuration parameters configured by the desktop module.

From Figs 1A-G, it could be seen that, the theme application in embodiments of the present disclosure may be referred to as a template displayed to the user by the application modules in the intelligent terminal which may include the desktop of the intelligent terminal, icons corresponding to the applications, the status bar, the screen locking module and other application modules. It should be understood by those skilled in the art that, by downloading different theme applications (such as, the above theme application "sunny", the theme application "Mailafent-memories of moonlight") from a theme application database (theme app), the intelligent terminal may display exteriors of different styles. The schematic diagrams shown by Figs 1A-F are merely exemplary, but should not be interpreted as limitations on the present disclosure.

Fig. 2 is a flow chart of a method for loading a theme application according to an exemplary embodiment. The method for loading a theme application may be applied in an intelligent terminal (such as, an intelligent phone, a tablet PC). In this embodiment, exemplary descriptions are made with reference to Figs 1A-G. As shown in Fig. 2, the method for loading a theme application includes following steps S201-S203.

At step S201, an operation instruction to the intelligent terminal from a user is detected.

In an embodiment, the operation instruction to the intelligent terminal from the user may be an operation instruction of re-opening the intelligent terminal after the user closes the intelligent terminal, an operation instruction of releasing by the user the intelligent terminal which is in the lock screen state, an operation instruction of opening by the user the message application on the touched screen of the intelligent terminal, an operation instruction of opening by the user the contact list application on the touched screen of the intelligent terminal, etc. That is, the operation instruction to the intelligent terminal from the user may be an operation instruction trigged by any action on the intelligent terminal from the user.

At step S202, it is determined whether an application module corresponding to the operation instruction exists in a downloaded theme application according to the operation instruction.

For example, assuming that the user has downloaded the theme application named "sunny" from a theme application database (theme app), or that the user is downloading the theme application "sunny" from the theme application database and some application modules in the theme application "sunny" have been downloaded and other application modules in the theme application "sunny" have not yet been downloaded, if it is determined that the operation instruction to the intelligent terminal from the user is an operation instruction of releasing the intelligent terminal which is in the lock screen state, firstly it is determined whether the releasing module of the theme application "sunny" is downloaded.

At step S203, if it is determined that the application module corresponding to the operation module exists, the application module is loaded to the intelligent terminal.

For example, if it is determined that the releasing module of the theme application "sunny" is downloaded, the releasing module of the theme application "sunny" is loaded to the intelligent terminal. Once the operation instruction to the intelligent terminal from the user is detected, the application module corresponding to the operation instruction is loaded, such that the application module may be loaded according to the interaction of the user and the intelligent terminal.

In an embodiment, it is determined whether the application module corresponding to the operation instruction exists in the downloaded theme application according to the operation instruction. If it is determined that the application module corresponding to the operation instruction exist, the application module is loaded to the intelligent terminal, such that the aim of loading the corresponding application module according to the operation instruction to the intelligent terminal from the user is achieved. The theme application may be applied in the intelligent terminal without wasting amount of time on decompressing, copying and merging the theme application by the intelligent terminal, thus reducing the waiting time of using the theme application by the user.

In an embodiment, the method may further include:
sending a first download instruction with a first priority to a theme application database installed on the intelligent terminal if it is determined that the application module corresponding to the operation instruction does not exist;
downloading the application module at the first priority from the theme application database according to the first download instruction.

In an embodiment, the method further includes:
detecting whether a second download instruction about the theme application exists in a theme application database installed on the intelligent terminal;
downloading the theme application via a second thread in the intelligent terminal if the second download instruction about the theme application exists.

In an embodiment, downloading the theme application via a second thread in the intelligent terminal includes:
determining download priorities corresponding to application modules in the theme application;
downloading the application modules in the theme application in an order determined according to the download priorities corresponding to the application modules.

In an embodiment, the method may further include:
displaying an indication indicating that the theme application is successfully loaded after any application module in the theme application is downloaded.

In this embodiment, in the situation that the intelligent device works normally, or the indicator lamp is still on, the indictor lamp may be switched off by a remote control way, thus avoiding the dazzling feeling of the user due to the indictor lamp, ensuring that the user may have a good rest and the user may use electricity safely indoor, and improving the convenience for a family home.

Details about loading the theme application may be obtained with reference to following embodiments.

Here, with the above method provided in the embodiments according to the present disclosure, the corresponding application module may be loaded according to the operation instruction to the intelligent terminal from the user, such that the problem that it takes a long time for the intelligent terminal to decompress, copy and merge the theme application before the theme application is applied in the intelligent terminal may be avoided, thus reducing the waiting time of the user for using the theme application.

In the following, the technical solution provided by the embodiments according to the present disclosure is described with specific embodiments.

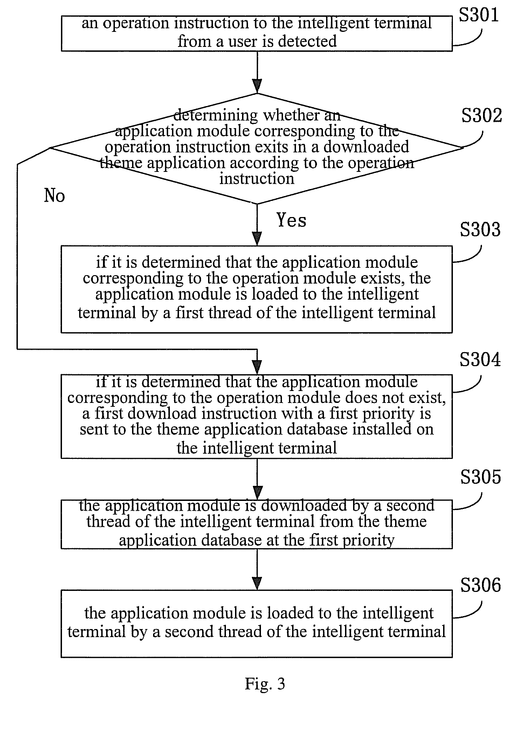

Fig. 3 is a flow chart of a method for loading a theme application according to a first exemplary embodiment. In this embodiment, taking how to load application modules of the theme application from a theme application database (app store) as an example and combined with Figs 1A-E, the above-mentioned method provided by the embodiments of the present disclosure is explained exemplarily. As shown in Fig. 3, the method includes following steps.

At step S301, an operation instruction to the intelligent terminal from a user is detected.

Concerning the descriptions of step S301, reference is made to the descriptions of step S201, which will not be elaborated herein.

At step S302, it is determined whether an application module corresponding to the operation instruction exists in a downloaded theme application according to the operation instruction. If the application module corresponding to the operation module exists, step S303 is executed. If the application module corresponding to the operation module does not exist, step S304 is executed.

Concerning the descriptions of step S302, reference is made to the descriptions of step S202, which will not be elaborated herein.

At step S303, if it is determined that the application module corresponding to the operation module exists, the application module is loaded to the intelligent terminal by a first thread of the intelligent terminal, and then the procedure is finished.

Concerning the descriptions of step S303, reference is made to the descriptions of step S203, which will not be elaborated herein.

At step S304, if it is determined that the application module corresponding to the operation module does not exist, a first download instruction with a first priority is sent to the theme application database installed on the intelligent terminal.

In an embodiment, the first priority of the first download instruction may be the highest priority, or may be a priority set according to the importance of application module. If the first priority is the highest priority, the application module corresponding to the operation instruction may be downloaded to the intelligent terminal as soon as possible, such that the waiting time of using the theme resource related to the operation instruction by the user may be greatly reduced.

At step S305, the application module is downloaded by a second thread of the intelligent terminal from the theme application database at the first priority.

At step S306, the first thread is initiated to load the application module to the intelligent terminal.

For example, if it is detected that the operation instruction to the intelligent terminal form the user is a releasing operation, it is determined whether the releasing module corresponding to the releasing operation exists in the downloaded theme application "sunny". If it is determined that the releasing module corresponding to the releasing operation exists, the releasing module is loaded to the intelligent terminal by the first thread of the intelligent terminal. If it is determined that the releasing module corresponding to the releasing operation does not exist, the releasing module is downloaded from the theme app by the second thread of the intelligent terminal, and is loaded to the intelligent terminal by the first thread. In this way, the releasing module is loaded by the first thread, or downloaded by the second thread, such that the parallelization of loading the application module and downloading the application module is implemented.

In this embodiment, the application module of the theme application is downloaded by the first thread of the intelligent terminal from the theme application database to the intelligent terminal, and the downloaded application module is loaded by the second thread of the intelligent terminal to the intelligent terminal, such that the parallelization of downloading and loading is implemented, thus reducing greatly the waiting time of using the theme resource related to the operation instruction by the user.

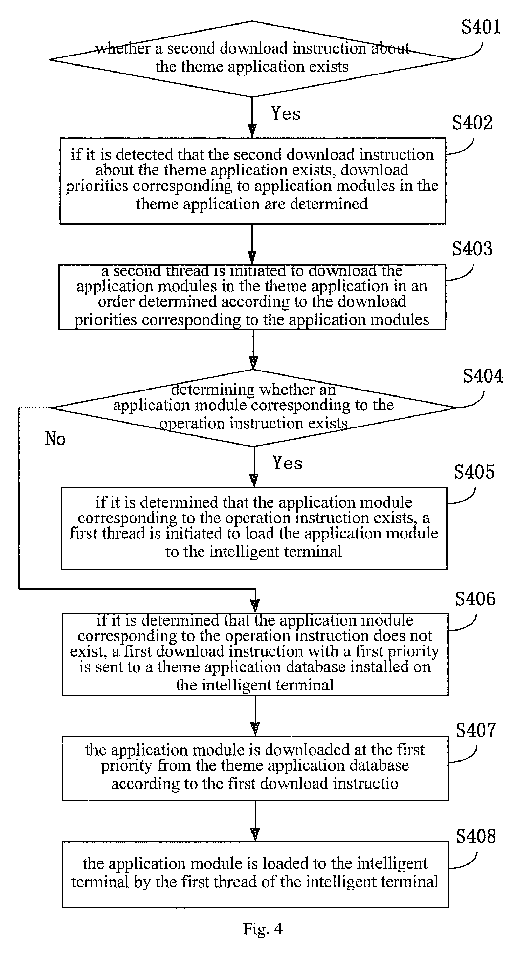

Fig. 4 is a flow chart of a method for loading a theme application according to a second exemplary embodiment. In this embodiment, taking how to adjust the download priorities of application modules in the theme application as an example and combined with Figs 1A-E, the above-mentioned method provided by the embodiments of the present disclosure is explained exemplarily. As shown in Fig. 4, the method includes following steps.

At step S401, it is detected whether a second download instruction about the theme application exists in a theme application database installed on the intelligent terminal.

At step S402, if it is detected that the second download instruction about the theme application exists, download priorities corresponding to application modules in the theme application are determined.

At step S403, a second thread is initiated to download the application modules in the theme application in an order determined according to the download priorities corresponding to the application modules.

At step S404, in the processing of downloading the theme application, if it is detected an operation instruction to the intelligent terminal from a user, it is determined whether an application module corresponding to the operation instruction exists in the downloaded theme application according to the operation instruction. If it is determined that the application module corresponding to the operation instruction exists, step S405 is executed. If it is determined that the application module corresponding to the operation instruction does not exist, step S406 is executed.

At step S405, if it is determined that the application module corresponding to the operation instruction exists, a first thread is initiated to load the application module to the intelligent terminal, and the procedure is finished.

At step S406, if it is determined that the application module corresponding to the operation instruction does not exist, a first download instruction with a first priority is sent to a theme application database installed on the intelligent terminal.

At step S407, the application module is downloaded at the first priority from the theme application database according to the first download instruction, and then the procedure is finished.

At step S408, the first thread of the intelligent terminal is initiated to load the application module to the intelligent terminal.

For example, if a download instruction of downloading the theme application "sunny" is detected in the theme application database (theme app), the download priorities corresponding to the application modules (such as, the desktop module, the screen locking module, the setting module, etc.) in the downloaded theme application "sunny" are determined. For example, the download priorities may be first downloading the desktop module, then downloading the screen locking module, and then downloading the setting module. In the processing of downloading the application modules at the above download priorities by the theme application "sunny", an operation instruction of opening the message application from the user is detected, it is determined whether the message module corresponding to the operation instruction of opening the message application exists in the downloaded theme application according to the operation instruction of opening the message application. If it is determined that the message module corresponding to the operation instruction of opening the message application exists, the first thread is initiated to load the message module of the theme application "sunny" to the intelligent terminal. If it is determined that the message module corresponding to the operation instruction of opening the message application does not exist, the first download instruction with the first priority is sent to the theme application database installed on the intelligent terminal (theme app), and the application module is downloaded at the first priority from the theme application database according to the first download instruction. The first priority may be higher than each of the download priorities in step S402, such that the message module of the theme application "sunny" may be downloaded preferentially. In this way, the problem that the user may wait for a long time caused by downloading the message module of the theme application "sunny" to the intelligent terminal at the preset priority may be avoided.

In this embodiment, the downloading and loading of the application module are implemented by downloading and loading by respective threads. The application module is downloaded according to a preset priority. In the loading process, it is determined according to the operation instruction from the user whether the corresponding application module is downloaded at the first priority from the theme application database, such that the parallelization of downloading and loading is achieved, thus reducing greatly the waiting time of using the theme resource related to the operation instruction by the user.

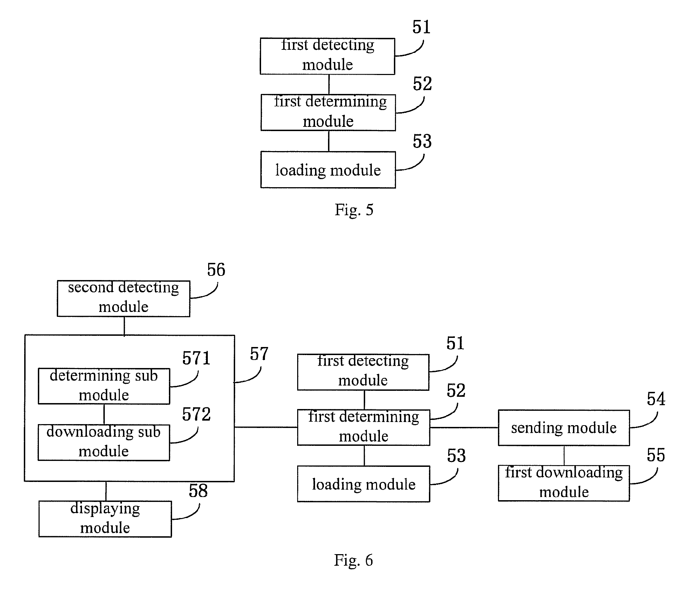

Fig. 5 is a block diagram of a device for loading a theme application according to an exemplary embodiment. The device is applied in an intelligent terminal. As shown in Fig. 5, the device for loading a theme application includes a first detecting module 51, a first determining module 52 and a loading module 53.

The first detecting module 51 is configured to detect an operation instruction to the intelligent terminal from a user.

The first determining module 52 is configured to determine whether an application module corresponding to the operation instruction exists in the theme application according to the operation instruction detected by the first detecting module 51.

The loading module 53 is configured to load the application module to the intelligent terminal if the first determining module 52 determines that the application module corresponding to the operation instruction exists.

Fig. 6 is block diagrams of another device for loading a theme application according to an exemplary embodiment. Based on the embodiment illustrated in Fig. 5, the device may further include a sending module 54, a first downloading module 55.

The sending module 54 is configured to send a first download instruction with a first priority to a theme application database installed on the intelligent terminal if the first determining module 52 determines that the application module corresponding to the operation instruction does not exist.

The first downloading module 55 is configured to download the application module at the first priority from the theme application database according to the first download instruction sent by the sending module 54.

In an embodiment, the device may further include a second detecting module 56 and a second downloading module 57.

The second detecting module 56 is configured to detect whether a second download instruction about the theme application exists in a theme application database installed on the intelligent terminal.

The second downloading module 57 is configured to download the theme application if the second detecting module 56 detects that the second download instruction about the theme application exists, such that the first determining module 52 may determine whether the application module corresponding to the operation instruction exists in the downloaded theme application.

In an embodiment, the second downloading module 57 may include a determining sub module 571, a downloading sub module 572.

The determining sub module 571 is configured to determine download priorities corresponding to application modules in the theme application corresponding to the second download instruction detected by the second detecting module 56.

The downloading sub module 572 is configured to download the application modules in the theme application in an order determined according to the download priorities corresponding to the application modules determined by the determining sub module 571.

In an embodiment, the device may further include a displaying module 58.

The displaying module 58 is configured to display an indication indicating that the theme application is successfully loaded after any application module in the theme application is downloaded by the second downloading module 57.

Concerning the implementation process of the function and action of each unit in the above device, reference is made to the implementation process of corresponding steps in the above method, which will not be elaborated herein.

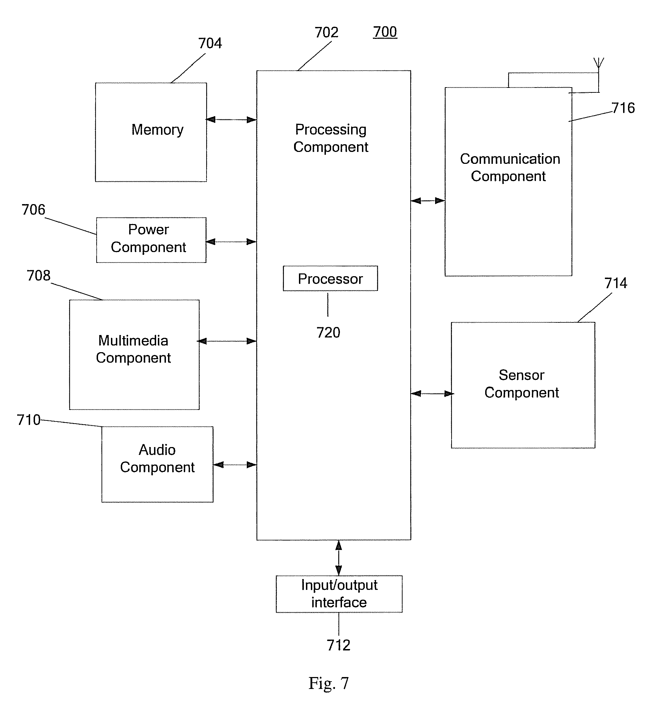

Fig. 7 is a block diagram of a device for loading a theme application according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for loading a theme application, wherein the method is applied in an intelligent terminal, the method being **characterized in that** it comprises:
detecting an operation instruction to the intelligent terminal from a user (S201, S301);
determining whether an application module corresponding to the operation instruction exists in the theme application according to the operation instruction (S202, S302, S404);
loading the application module to the intelligent terminal if it is determined that the application module corresponding to the operation instruction exists (S203, S303, S405).

2. The method according to claim 1, further comprising:
sending a first download instruction with a first priority to a theme application database installed on the intelligent terminal if it is determined that the application module corresponding to the operation instruction does not exist (S304, S406);
downloading the application module at the first priority from the theme application database according to the first download instruction (S305, S407).

3. The method according to claim 1 or 2, further comprising:
detecting whether a second download instruction about the theme application exists in a theme application database installed on the intelligent terminal (S401);
downloading the theme application if the second download instruction about the theme application exists.

4. The method according to any one of claims 1-3, wherein the step of downloading the theme application comprises:
determining download priorities corresponding to application modules in the theme application (S402);
downloading the application modules in the theme application in an order determined according to the download priorities corresponding to the application modules (S403).

5. The method according to any one of claims 1-4, further comprising:
displaying an indication indicating that the theme application is successfully loaded after any application module in the theme application is downloaded.

6. A device for loading a theme application, wherein the device is applied in an intelligent terminal and the device being **characterized in that** it comprises:
a first detecting module (51), configured to detect an operation instruction to the intelligent terminal from a user;
a first determining module (52), configured to determine whether an application module corresponding to the operation instruction exists in the theme application according to the operation instruction detected by the first detecting module;
a loading module (53), configured to load the application module to the intelligent terminal if the first determining module determines that the application module corresponding to the operation instruction exists.

7. The device according to claim 6, further comprising:
a sending module (54), configured to send a first download instruction with a first priority to a theme application database installed on the intelligent terminal if the first determining module determines that the application module corresponding to the operation instruction does not exist;
a first downloading module (55), configured to download the application module at the first priority from the theme application database according to the first download instruction sent by the sending module.

8. The device according to claim 6 or 7, further comprising:
a second detecting module (56), configured to detect whether a second download instruction about the theme application exists in a theme application database installed on the intelligent terminal;
a second downloading module (57), configured to download the theme application if the second detecting module detects that the second download instruction about the theme application exists.

9. The device according to any one of claims 6-8, wherein the second detecting module (57) comprises:
a determining sub module (571), configured to determine download priorities corresponding to application modules in the theme application corresponding to the second download instruction detected by the second detecting module;
a downloading sub module (572), configured to download the application modules in the theme application in an order determined according to the download priorities corresponding to the application modules determined by the determining sub module.

10. The device according to any one of claims 6-9, further comprising:
a displaying module (58), configured to display an indication indicating that the theme application is successfully loaded after any application module in the theme application is downloaded by the second downloading module.

11. A device for loading a theme application, comprising:
a processor; and
a memory for storing instructions executable by the processor,
wherein the processor is **characterized in that** it is configured to:
detect an operation instruction to the intelligent terminal from a user;
determine whether an application module corresponding to the operation instruction exists in the theme application according to the operation instruction;
load the application module to the intelligent terminal if it is determined that the application module corresponding to the operation instruction exists.

12. A computer program including instructions for executing the steps of a method for loading a theme application according to any one of claims 1 to 5 when said program is executed by a computer.

13. A recording medium readable by a computer and having recorded thereon a computer program including instructions for executing the steps of a method for loading a theme application according to any one of claims 1 to 12.
